# EUROPEAN PATENT SPECIFICATION

(11) **EP 2 339 459 B1**
(45) Date of publication and mention of the grant of the patent: **26.09.2018**
(21) Application number: 09180323.9
(22) Date of filing: 22.12.2009
(51) Int. Cl.: G06F 8/65

(54) **Method, system and apparatus for installing software on a mobile electronic device via a proxy server**
Verfahren, System und Vorrichtung zur Installation von Software auf einer mobilen elektronischen Vorrichtung über einen Proxyserver
Procédé, système et appareil pour installer un logiciel dans un dispositif électronique mobile via un serveur proxy

(43) Date of publication of application: 29.06.2011
(73) Proprietor: BlackBerry Limited, Waterloo, ON N2K 0A7 (CA)
(72) Inventor: Tyhurst, Timothy Richard, Waterloo, ON N2L 5R9 (CA); Landry, Paul Edward, Waterloo, ON N2L 5R9 (CA)
(74) Representative: MERH-IP Matias Erny Reichl Hoffmann Patentanwälte PartG mbB

(56) References cited:
- GB-A- 2 346 716
- US-A1- 2004 154 014
- US-B1- 7 409 208

## Description

### FIELD OF THE INVENTION

The specification relates generally to servers, and specifically to a method, system and apparatus for installing software on a mobile electronic device via a proxy server.

### BACKGROUND

Software can be installed at mobile electronic devices using servers that are publicly available, for example, via the Internet. For example US-7409208-B1 discloses providing a catalog of available software products tailored to the user's preferences so users can download applications that appeal to their interest to their mobile device. However when a mobile electronic device is associated with an entity, the entity may wish to control which software is installed at the mobile electronic device: an application that the entity might require to be present on the mobile electronic device can be incompatible with publicly available software and hence it is desirable to restrict installation of the publicly available software. For example, the application might work only on a given version of an operating system; hence the entity may wish to prevent installation of a new publicly available operating system. Furthermore, installation of incompatible software can cause a mobile electronic device to become inoperable.

### SUMMARY OF THE INVENTION

A first aspect of the specification provides a method according to claim 1 for installing software at a mobile electronic device, the mobile electronic device enabled for communication with a computing device, the method implementable in an associated proxy server.

A second aspect of the specification provides a method according to independent claim 8 for installing software at a mobile electronic device, the mobile electronic device enabled for communication with a computing device, the method implementable in the computing device.

A third aspect of the specification provides a proxy server according to independent claim 10 for installing software at a mobile electronic device, the mobile electronic device enabled for communication with a computing device.

A fourth aspect of the specification provides a computing device according to independent claim 11 for installing software at a mobile electronic device.

A fifth aspect of the specification provides a system according to independent claim 12 for installing software at a mobile electronic device.

A sixth aspect of the specification provides a computer program product according to independent claim 13, comprising a computer usable medium having a computer readable program code adapted to be executed to implement a method for installing software at a mobile electronic device, the mobile electronic device enabled for communication with a computing device, the method implementable in an associated proxy server.

A seventh aspect of the specification provides a computer program product according to independent claim 14, comprising a computer usable medium having a computer readable program code adapted to be executed to implement a method for installing software at a mobile electronic device, the mobile electronic device enabled for communication with a computing device, the method implementable in the computing device.

### BRIEF DESCRIPTIONS OF THE DRAWINGS

Embodiments are described with reference to the following figures, in which:
Fig. 1 depicts a block diagram of a system for installing software at a mobile electronic device, according to non-limiting embodiments;
Fig. 2 depicts a flowchart of a method for installing software at a mobile electronic device, according to non-limiting embodiments;
Fig. 3 depicts a block diagram of a system for installing software at a mobile electronic device, according to non-limiting embodiments;
Fig. 4 depicts a representation of a browser application for initiating installation of software at a mobile electronic device, according to non-limiting embodiments;
Fig. 5 depicts a block diagram of a system for installing software at a mobile electronic device, according to non-limiting embodiments;
Fig. 6 depicts a representation of a software loading application, according to non-limiting embodiments;
Figs. 7 and 8 depict a block diagram of a system for installing software at a mobile electronic device, according to non-limiting embodiments.

### DETAILED DESCRIPTION OF THE EMBODIMENTS

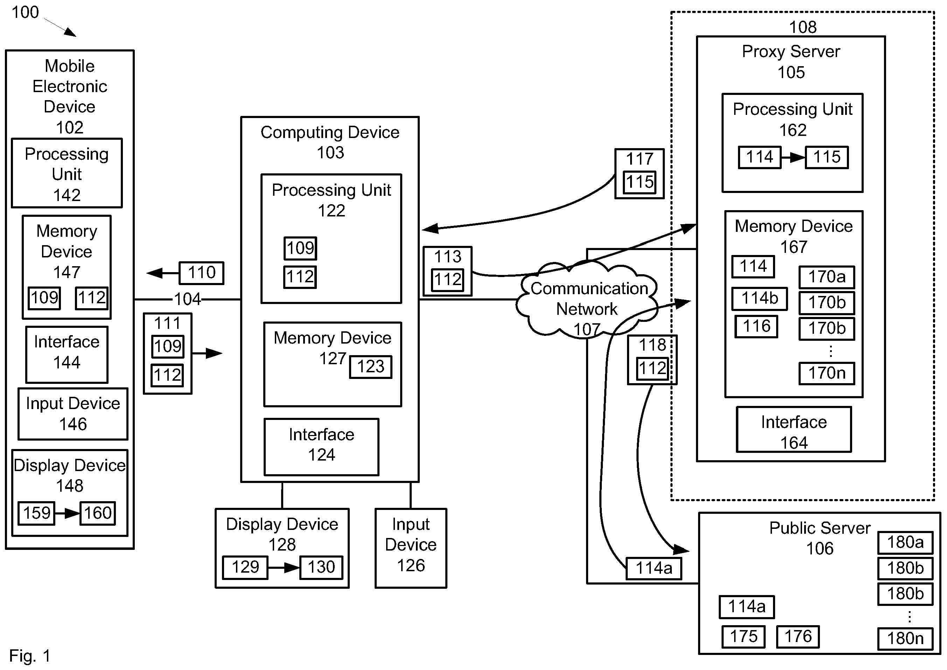

Figure 1 depicts a system 100 for installing software at a mobile electronic device 102 in communication with a computing device 103, according to non-limiting embodiments. Computing device 103 and mobile electronic device 102 are each enabled for communication with each other via a link 104. Computing device 103 is further enabled for communication with a proxy server 105 and a public server 106 enabled as a gateway for software downloads. Computing device 103, proxy server 105 and public server 106 are each enabled for communication with each other via a communication network 107.

It is generally understood that in exemplary non-limiting embodiments, mobile electronic device 102 and proxy server 105 can each be associated with an entity 108, for example a network operator, a carrier, a business, an organization, a company, or the like. For example, entity 108 can operate proxy server 105, and issue mobile electronic device 102 to a user associated with entity 108 (an employee, a customer, or the like). In general, it is understood that entity 108 prefers that software for installation on mobile electronic device 102 be approved software, for example approved by entity 108. In contrast, in the prior art, software that is not necessarily approved can be retrieved at mobile electronic device 102 via public server 106, for installation at mobile electronic device 102, which can cause mobile electronic device 102 to become at least partially inoperable and/or the unapproved software can be incompatible with applications already installed on mobile electronic device 102. Furthermore, entity 108 may desire to limit/hide certain software upgrades available from public server 106, such as system software upgrades, as entity 108 may have technical support staff trained to provide support on a specific version of software, but aren't yet prepared to support newer versions.

To address these problems, an address 109 of proxy server 105 is stored at mobile electronic device 102, for example in a provisioning process prior to issuing mobile electronic device 102. Address 109 can comprise a network address of proxy server 105. Then, when queries for software installation are being generated, computing device 103 can responsively retrieve address 109 from mobile electronic device 102, via a request 110 transmitted to mobile electronic device 102. Mobile electronic device 102 can then transmit a response 111 to computing device 103, response 111 comprising address 109 and an identifier 112 of mobile electronic device 102, as described in further detail below.

Computing device 103 then receives response 111 and then processes address 109 to transmit a query 113 to proxy server 105 via communication network 107. Query 113 is generally enabled to request a list of available software for installation on mobile electronic device 102, query 113 comprising identifier 112. It is understood that in the prior art, a query for available software would be generally directed to public server 106 rather than proxy server 105, query 113 directed to proxy server 105 due the retrieval of address 109 from mobile electronic device 102. In response to receiving query 113, proxy server 105 generates a list 114 of software available for installation at mobile electronic device 102, and modifies list 114 to produce a modified list 115 of approved software approved by entity 108. In some embodiments, list 114 can be filtered based on rules 116 available to proxy server 105. Furthermore, in some embodiments, proxy server 105 can be enabled to perform some level of authentication/authorization to decide if it should provide service. For example, proxy server 105 can base such a decision on identifier 112 or information derived from identifier 112, such as a user identity. Such authentication/authorization can prevent public access to application and/or data files 170 that are proprietary to entity 108. Hence, when proxy server 105 determines that access is not to be provided, in lieu of response 117, an error message can be returned, and/or redirection to public server 106 can occur.

For example, in some embodiments, list 114 can be at least partially retrieved from public server 106, at which a list 114a of publicly available software can be generated. In these embodiments, proxy server 105 can transmit a query 118 to public server 108 via communication network 107 for a list of software publicly available for installation on mobile communication device 102, query 118 comprising identifier 112. List 114a can then be generated, if not already stored at public server 106, and transmitted back to proxy server 105 and list 114 can be at least partially generated from list 114a. In this manner, proxy server 105 can use the software management and tracking capabilities of public server 106 without having to waste resources managing and tracking all available software for download to mobile electronic device 102.

In further embodiments, list 114 can be at least partially generated from a list 114b of software approved by entity 108 available from resources associated with proxy server 105 and/or entity 108, but not necessarily available from public server 106, as will be described below.

In any event, list 114 can comprise a list of both publicly available software and/or software approved by entity 108 available from resources associated with proxy server 105 and/or entity 108, but not necessarily available from public server 106. List 114 can then be modified to produce modified list 115, for example using rules 116.

For example, rules 116 can comprise identifiers of software approved for installation on mobile electronic device 102, including but not limited to alphanumeric names, software version numbers, and/or any other suitable identifier. Furthermore, it is understood that rules 116 can comprise identifiers of software available via public server 106 and/or available from resources associated with proxy server 105, though it is understood that identifiers in rules 116 each correspond to approved software and/or software that is to be filtered. For example, in some embodiments, some identifiers 116 can correspond to explicitly disallowed software. For example, one could have a rule of the form "System Software Version 4.5.0 must be used"; but if entity 108 doesn't want to allow a games application to be installed, there can be a separate rule to suppress it, by way of a corresponding identifier and a rule to disallow its installation.

Rules 116 can further comprise identifiers of approved software available for installation on mobile electronic devices other than mobile electronic device 102, and identifier 112 can be used to distinguish between the various approved software. For example identifier 112 can comprise an identification number of mobile electronic device 102, a model number of mobile electronic device 102, an identifier of a manufacturer of mobile electronic device 102, an identifier of a channel or reseller of mobile electronic device 102, a version number of software installed on mobile electronic device 102, such as a version number of an operating system, and the like. In some embodiments, the identification number can be used to retrieve further information about mobile electronic device 102, for example the model number, the version of the operating system etc., by using the identification number to query a database (not depicted) storing such data. In other embodiments, identifier 112 can also be used to retrieve the identity of an end-user associated with mobile electronic device 102; for example, in embodiments where entity 108 comprises a corporation, proxy server 105 can be a element of a corporate server for managing e-mail and the like, and some or all of rules 116 can be associated with a given user or groups of users, rather than directly to a device.

Modified list 115 is then transmitted to computing device 103 in a reply 117, such that the approved software can be selected for installation on mobile electronic device 102, as will be described in further detail below. Hence by modifying list 114 of available software to produce list 115 of approved software, proxy server 105 can enable control over which software can be installed at mobile electronic device 102 without having to duplicate the features of public server 106. Furthermore, changes to the approved software can be made by modifying rules 116, independent of any changes that might occur at public server 106.

It is understood that link 104 can comprise any suitable combination of wired and wireless links desired, such that computing device 103 can communicate with mobile electronic device 102. In some embodiments, link 104 comprises a local link, such that mobile electronic device 102 can communicate with computing device 103 when local to computing device 103. In these embodiments, local link 104 can include, but is not limited to a wired connection, a wireless connection, a cabled connection, a USB (Universal Serial Bus) connection, a WiFi connection, a Bluetooth connection, a near field communication (NFC) connection, and the like or a combination. Other suitable local connections are within the scope of present embodiments.

Communication network 107 can comprise any suitable combination of wired and wireless communication networks as desired, including but not limited to packet based networks, the internet, analog networks, the PSTN (public switched telephone network), cell-phone networks (including but not limited to CDMA, GMS, UTMS, 1X, Edge and the like), WiFi and WiMax networks.

Computing device 103 comprises a processing unit 122 interconnected with a communication interface 124 and a memory device 127, for example via a computing bus (not depicted). Computing device 103 is further associated with an input device 126 and a display device 128 in communication with computing device 103, such that input data can be received at processing unit 122 from input device 126, and display device 128 can be controlled by processing unit 122. As depicted, input device 126 and display device 128 are external to computing device 103, however in other embodiments, computing device 103 can comprise input device 126 and display device 128.

In general, computing device 103 comprises any suitable computing device for communicating with mobile electronic device 102, proxy server 105 and public server 106, including but not limited to any suitable combination of personal computers and laptop computing devices. Other suitable computing devices are within the scope of present embodiments.

Processing unit 122 comprises any suitable processor, or combination of processors, including but not limited to a microprocessor, a central processing unit (CPU) and the like. Other suitable processing units are within the scope of present embodiments. In particular, processing unit is enabled to process a browser application 123 stored in memory device 127, browser application 123 for requesting and processing browser data, for example from remote computing devices via communication network 107.

Communication interface 124 comprises any suitable wired and/or wireless communication interface, or combination of communication interfaces, enabled to communicate with mobile electronic device 102 via link 104 and with proxy server 105 and public server 106 via communication network 107. Accordingly, communication interface 124 is enabled to communicate according to any suitable protocol compatible with link 104, including but not limited to wired protocols, USB protocols, serial cable protocols, wireless protocols, cell-phone protocols, wireless data protocols, Bluetooth protocols, NFC protocols and/or a combination, or the like. Communication interface 124 is further enabled to communicate according to any suitable wired or wireless protocols compatible with communication network 107, including but not limited to packet based protocols, Internet protocols, analog protocols, PSTN protocols, cell phone protocols, WiFi protocols, WiMax protocols and the like, and/or a combination. Other suitable communication interfaces and/or protocols are within the scope of present embodiments.

Input device 126 is generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present embodiments.

Memory device 127 can comprise any suitable memory device, including but not limited to any suitable one of or combination of volatile memory, non-volatile memory, random access memory (RAM), read-only memory (ROM), hard drive, optical drive, flash memory, magnetic computer storage devices (e.g. hard disks, floppy disks, and magnetic tape), optical discs, and the like. Other suitable memory devices are within the scope of present embodiments. In particular, memory device 127 is enabled to store browser application 123.

Display device 128 comprises circuitry 129 for generating representations of data, for example a representation 130 of browser application 123, as will be described below. Display device 128 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 129 can include any suitable combination of circuitry for controlling the CRT and/or flat panel displays etc., including but not limited to display buffers, transistors, electron beam controllers, LCD cells, plasmas cells, phosphors etc. In particular, display device 128 and circuitry 129 can be controlled by processing unit 122 to generate representation 130.

Mobile electronic device 102 can comprise one or a combination of a PDA, a cell phone, a mobile phone, a mobile communication device, and a portable electronic device. Mobile electronic device 102 comprises a processing unit 142, a communication interface 144, an input device 146, a memory device 147, and a display device 148, all in communication, for example, via a computing bus (not depicted). Each of processing unit 142, communication interface 144, input device 146, memory device 147 and display device 148 can be respectively similar to processing unit 122, communication interface 124, input device 126, memory device 127 and display device 128, described above.

In particular, it is understood that communication interface 144 is enabled to communicate with computing device 103 via link 104 via any suitable combination of wired and wireless protocols, similar to communication interface 124. It is further understood that, in some embodiments, communication interface 144 can be enabled to communicate with remote communication device via at least a wireless network (not depicted), for example a wireless network operated by a carrier network operator.

It is further understood that display device 148 comprises circuitry 159, similar to circuitry 129, for generating representations of data, such as representation 160, as will be described in further detail below.

Proxy server 105 can comprise one or a combination of any suitable computing device and any suitable server. Proxy server 105 comprises a processing unit 162, a communication interface 164, and a memory device 167, all in communication, for example, via a computing bus (not depicted). Each of processing unit 162, communication interface 164, and memory device 167 can be respectively similar to processing unit 122, communication interface 124, and memory device 127, described above.

In particular, it is understood that communication interface 164 is enabled to communicate with computing device 103 and public server 106 via communication network 107 via any suitable combination of wired and wireless protocols, similar to communication interface 124. It is further understood that, communication interface 164 can be enabled to communicate with other resources associated with proxy server 105 and/or entity 108 via communication network 107, including but not limited to databases, external memory devices, and the like.

In yet further embodiments, proxy server 105 can store data files 170a, 170b, 170c...170n (collectively data files 170 and generically a data file 170) associated with software available for download to mobile electronic device 102. In general it is understood that data files 170 are each associated with approved software as data files 170 are stored on resources associated with proxy server 105. In other embodiments, at least a portion of data files 170 can be stored on other resources associated with proxy server 105, and/or entity 108, for example a database or software server in communication with communication network 107. Such resources associated with proxy server 105 can be remote from proxy server 105.

Public server 106 can comprise one or a combination of any suitable computing device and any suitable server. Though not depicted, it is understood that public server 106 comprises a processing unit, a communication interface, and a memory device, all in communication, for example, via a computing bus, which can be can be respectively similar to processing unit 122, communication interface 124, and memory device 127, described above. In particular, public server 106 is enabled as a gateway for managing downloads of software available to be installed on mobile electronic device 102 and alternatively on other electronic devices. Public server 106 is further enabled to manage and track software available for download to mobile electronic device 102.

In some embodiments, public server 106 is enabled to store a software loading application 175, available for download to computing device 103, software loading application 175 for downloading software to computing device 103, once installed thereupon, software downloaded from network resources, and causing downloaded software to be installed at mobile electronic device 102.

In some embodiments, public server 106 is further enabled to store browser data 176, which can be downloaded to computing device 103 and displayed within a representation of browser application 123 on display device 128. Browser data 176 can be requested by computing device 103 when browsing application 123 is being processed. In some of these embodiments, as will be described below, browser data 176 can be enabled to initiate download of application 175 to computing device 103.

In yet further embodiments, public server 106 can store data files 180a, 180b, 180c...180n (collectively data files 180 and generically a data file 180) associated with software available for download to mobile electronic device 102. In other embodiments, at least a portion of data files 180 can be stored remotely, for example a database or software server in communication with communication network 107.

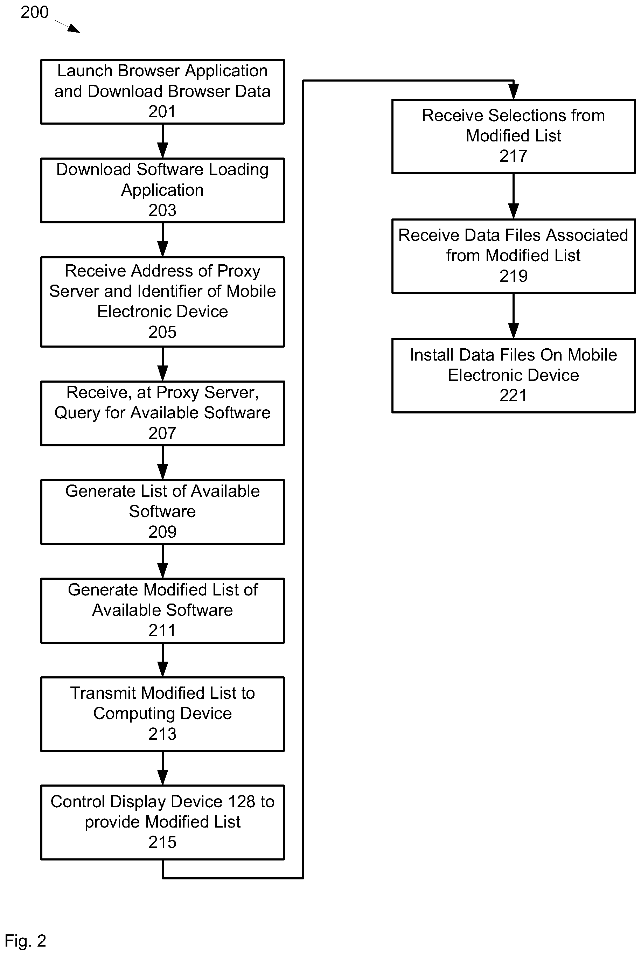

Attention is now directed to Figure 2 which depicts a method 200 for installing software at a mobile electronic device 102 enabled for communication with a computing device 103. In order to assist in the explanation of method 200, it will be assumed that method 200 is performed using system 100. Furthermore, the following discussion of method 200 will lead to a further understanding of system 100 and its various components. However, it is to be understood that system 100 and/or method 200 can be varied, and need not work exactly as discussed herein in conjunction with each other, and that such variations are within the scope of present embodiments.

In method 200, it is understood that mobile electronic device 102 is in communication with computing device 103 via link 104 (e.g. link 104 has been established and/or mobile electronic device 102 is connected to computing device 103.

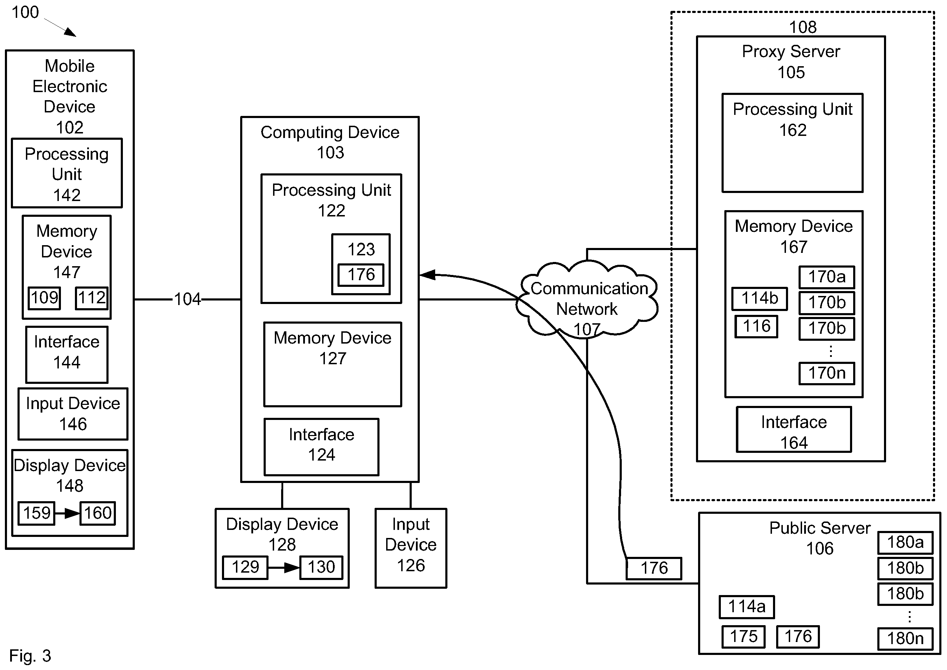

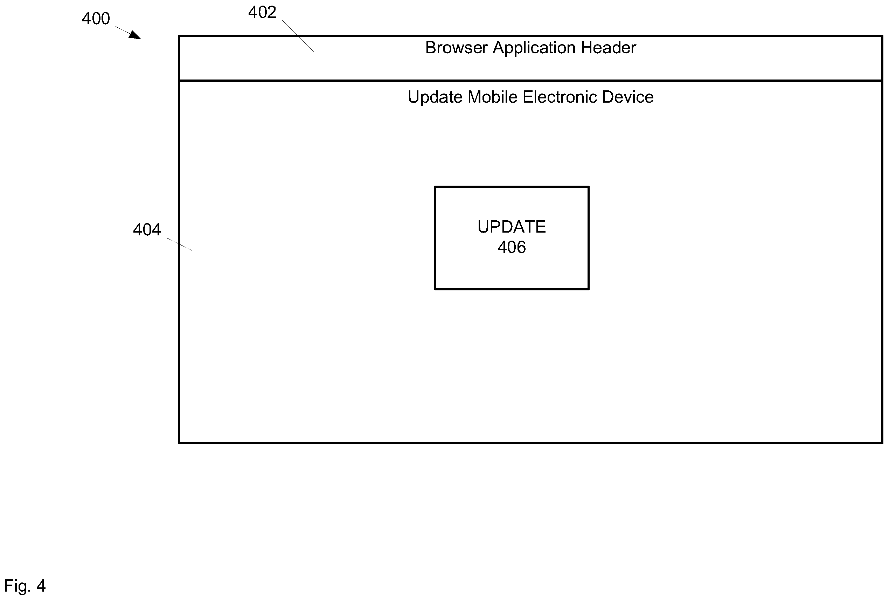

At step 201, browser application 123 is processed by processing unit 122 at computing device 103 and browser data 176 is requested from public server 106, for example via a request (not depicted) transmitted to public server 106 via communication network 107. In general it is understood that by requesting browser data 176, computing device 103 is initiating a process for downloading of software to mobile electronic device 102. For example, computing device 103 can receive an address of public server 106 via input device 126 and/or data stored in memory device 127 (e.g. in a "favourites" folder) such that public server 106 can be queried. Furthermore, as depicted in Fig. 3, which is substantially similar to Fig. 1 with like elements having like numbers, it is understood that browser data 176 is being provided within browser application 123, and display device 128 is being controlled to provide a representation 400, as depicted in Fig. 4, of browser application 123 and browser data 176. Non-limiting exemplary embodiments of representation 400 depicted in Fig. 4 can comprise a header 402, a body 404 and a virtual "UPDATE" button 406. In general, the body 404 and button 406 comprises a representation of browser data 176. In some embodiments, representation 130 comprises representation 400.

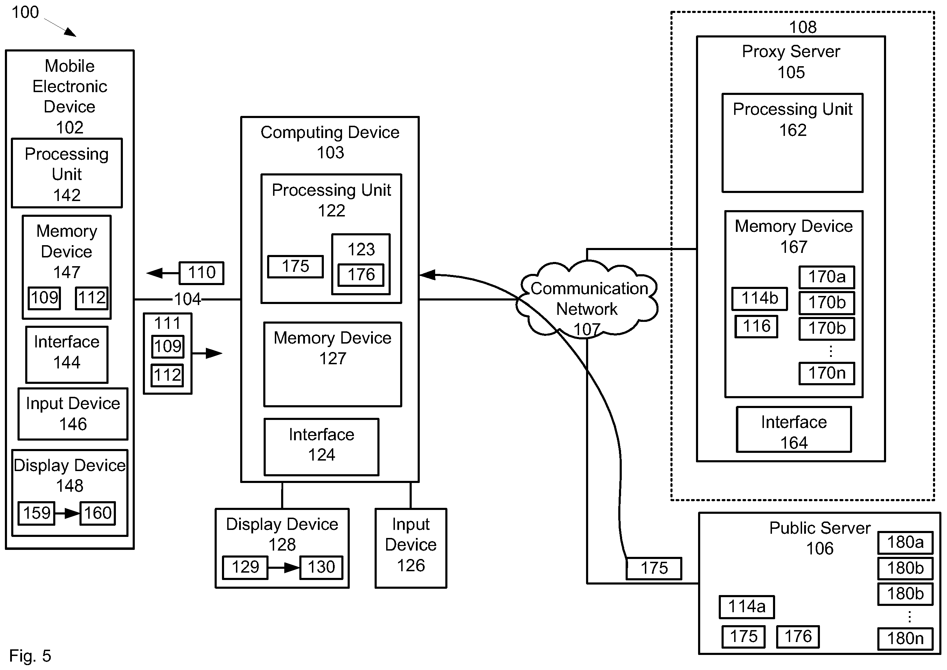

At step 203, actuation of button 406 is detected and in response software loading application 175 is downloaded from public server 106. For example, browser data 176 can comprise instructions for causing software loading application 175 to be downloaded from public server 106 upon actuation of button 406. It is understood that in some embodiments, software loading application 175 is launched once downloaded, as depicted in Fig. 5, substantially similar to Fig. 1 with like elements having like numbers.

At step 205, software downloading application 175 causes query 110 to be transmitted to mobile electronic device 102, as described above, such that response 111 comprising address 109 and identifier 112 are received. Address 109 is processed by computing device 103 to direct query 113 to proxy server 105 rather than public server 106.

At step 207, performed at proxy server 105, query 113 for available software, for installation on mobile electronic device 102, is received from computing device 103. At step 209, proxy server 105 generates list 114 of the available software for download to mobile electronic device 102. As described above, generating list 114 can comprise at least one of retrieving at least a first portion of list 114, for example list 114a, from public server 106, and determining at least a second portion of list 114, for example list 114b, based on software available from resources associated with proxy server 105, for example data files 170. It is understood that either of list 114a and list 114b can be maintained at public server 106 and proxy server 105, respectively, and/or generated upon demand by processing data files 180 and data files 170 respectively.

In depicted embodiments, list 114a comprises at least one identifier and/or at least one network address of software associated with data files 180, for example alphanumeric identifiers: "180a", "180b", "180c", and "180n". List 114b comprises at least one identifier and/or at least one network address of software associated with data files 170, for example alphanumeric identifiers: "170a", "170b", "170c", and "170n". Hence, list 114 comprises alphanumeric identifiers: "170a", "170b", "170c", "170n", "180a", "180b", "180c", and "180n".

At step 211, list 114 is modified to produce a modified list 115 of approved software. As described above, list 114 can be modified by at least one of: modifying list 114 based on rules 116; removing software that is not approved from list 114; and adding to list 114 approved software available from resources associated with proxy server 105, but not available from the public server, such as software associated with data files 170. Furthermore, it is understood that modified list 115 comprises at least one of: at least one identifier of the approved software; and at least one network address of a resource from where data files associated with the approved software can be retrieved, for example a network address of proxy server 105 and/or a network address of public server 106 and/or a network address of another resource from where data files associated with the approved software can be retrieved.

Hence, for example, rules 116 can indicate that: a. software stored at resources associated with proxy server 105 is approved software; and b. that only software associated with data files 180b, 180n are approved. Thus, in exemplary embodiments, modified list 115 comprises alphanumeric identifiers: "170a", "170b", "170c", "170n", "180b", and "180n"

At step 213, modified list 115 is transmitted to computing device 103 via communication network 107, such that the approved software can be selected for installation on mobile electronic device 102.

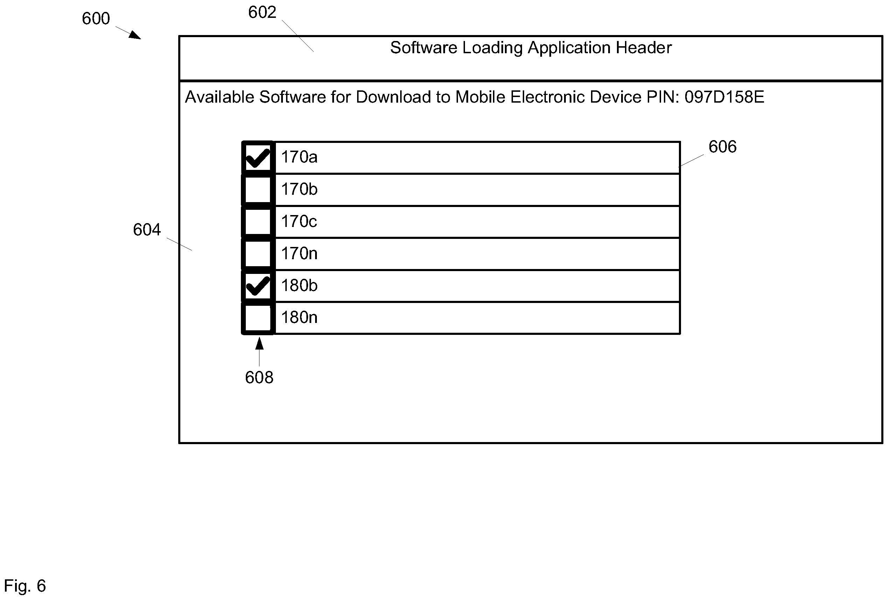

At step 215, display device 128 is controlled by processing unit 122 to provide a representation 600 of software loading application 175, representation 600 comprising a header portion 602, a body portion 604, and a representation 606 of modified list 115, as depicted in Fig. 6. Representation 606 comprises identifiers of the approved software, identifiers "170a", "170b", "170c", "170n", "180b", and "180n" each corresponding to approved software. For convenience identifiers of approved software in representation 606 each comprise an alphanumeric identifier of corresponding data files, 170a, 170b, 170c, 170n, 180b, and 180n, though it is understood that more than one data file 170, and/or more than one data file 180, can correspond to a single approved software application.

Representation 606 further comprises respective checkboxes 608 associated with (e.g. adjacent to) each identifier, which can all initially be checked or unchecked, as desired. The state of a given checkbox 608 can be changed from checked to unchecked, or vice versa, upon receiving input data from input device 126 indicating that a given checkbox 608 has been actuated. For example, a pointing device can be used to select a given checkbox 608 and change its state. In any event, a checked checkbox 608 can indicate that approved software associated with the adjacent identifier has been selected for download. For example, in depicted embodiments, approved software associated with identifiers "170a" and "180b" have been selected. In yet further embodiments, modified list 115 can comprise processing instructions and/or embedded logic for instructing software loading application 175 to prevent some checkboxes 608 from being unchecked; that is, entity 108 could require that certain data files 170/180 be loaded onto mobile electronic device 102.

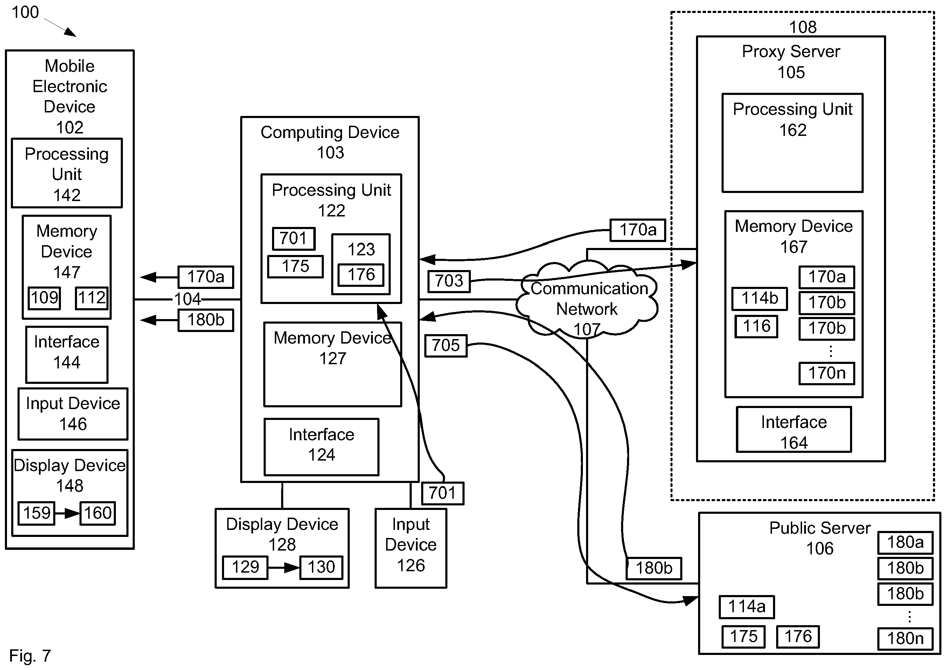

In any event, returning to Fig. 2, at step 217, selections 701 from modified list 115 are received, at step 219, and data files associated with the selection are retrieved, for example data files 170a, 180b. This is illustrated in Fig. 7, substantially similar to Fig. 1, which like elements having like numbers, in which a request 703 for data file 170a is transmitted to proxy server 105, and a request 705 for data file 180b is transmitted to public server 180b. Each of proxy server 105 and public server 106 responds by transmitting respective data files 170a, 180b back to computing device 103. As well, in some embodiments, retrieval of data files 170 and 180 can optionally require authorization; for example, access to such data files 170 can be restricted to mobile electronic devices "known" to the proxy server 105 according to identifier 112. In embodiments where authorization is not successful, an error message can be returned in lieu of data file 170a. Then, at step 221, data files associated with the selection are installed on mobile electronic device 102. In some embodiments, computing device 103 can be enabled to manage the software download, while in other embodiments the software download can be managed by a combination of computing device 103 and proxy server 105.

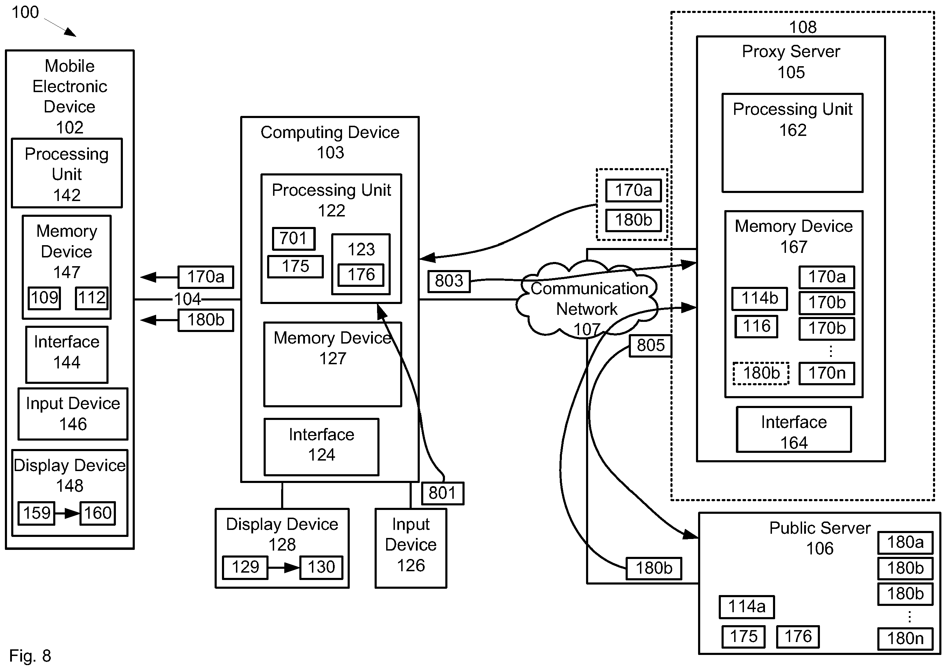

For example, in embodiments where computing device 103 manages the software download, step 217 can comprise receiving the selections from modified list 115 at processing unit 122 via input data 801 received at input device 115, and transmitting a request 803 for data files 107a, 108b to proxy server 105, as depicted in Fig. 8 (substantially similar to Fig. 1, with like elements having like numbers). In these embodiments, it is understood that all requests for software are to proceed via proxy server 105, and hence modified list 115 only optionally includes addresses of resources from where software can be retrieved. Step 219 can then comprise, upon receipt of request 803, proxy server 105 retrieving the appropriate data files. For example, data file 180b can be retrieved from public server 106 via a request 805, and data file 170a can be retrieved from memory device 167. In some embodiments, where public server 106 does not store data file 180b, data file 180b can be in turn requested and received from any suitable resource known to public server 106. Hence, public server 106 can in turn act as a proxy for retrieving software. Alternatively, if list 114a included at least one network address of a resource from where data file 180b could be retrieved, proxy server 105 can request data file 180b directly from the resource.

In any event, each of proxy server 105 then transmits respective data files 170a, 180b back to computing device 103, which then causes data files 170a, 180b to be downloaded to mobile electronic device 102 via link 104 for installation, either separately or in a bundle, as desired. Mobile electronic device 102 then receives data files 170a, 180b and installs them, either under control of computing device 103 via link 104 or upon receipt.

In some of these embodiments, once data file 180b is received at proxy server 105, proxy server 105 can cause data file 180b to be stored in memory device 167, or any other suitable resource associated with proxy server 105 such that data file 180b need not be retrieved a second time from public server 106, for example if requested by another computing device in another software download process. Indeed, any suitable subset of data files retrieved from public server 106 can be stored at proxy server 105 to prevent a second retrieval.

In any event, by storing a network address of a software downloading proxy server at a mobile electronic device, which is retrieved by a computing device managing the software downloads, software download requests can be redirected to the proxy server rather than a public server. The proxy server can retrieve lists and/or identifiers of software available for download via the public server and then filter the list so that it contains only identifiers of approved software. Furthermore, the proxy server can authenticate the requests and alternatively provide error messages if authentication fails or redirect the requests to the public server. Approval of software can be ongoing and indications of approved software can be stored in rules at the proxy server. The proxy server can also augment the list to add approved software that is available through the proxy server but not the public server. The modified list can then be transmitted to the computing device, selections can be made from the modified list and then the selected approved software can be downloaded and installed on the mobile electronic device. Hence, control of software installed on the mobile electronic device can be implemented via the proxy server, as access to the public server for downloading software is redirected through the proxy server.

Those skilled in the art will appreciate that in some embodiments, the functionality of mobile electronic device 102, computing device 103, proxy server 105 and public server 106 can be implemented using pre-programmed hardware or firmware elements (e.g., application specific integrated circuits (ASICs), electrically erasable programmable read-only memories (EEPROMs), etc.), or other related components. In other embodiments, the functionality of mobile electronic device 102, computing device 103, proxy server 105 and public server 106 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

## Claims

1. A method for installing software at a mobile electronic device (102), said mobile electronic device (102) enabled for communication with a computing device (103), said method implementable in a proxy server (105) enabled for communication with said computing device (103), said method comprising:
receiving (207), from said computing device (103), a query (113) for available software for installation on said mobile electronic device (102), said query directed to said proxy server (105), wherein a network address (109) of the proxy server (105) for querying the proxy server (105) is pre-stored in the mobile electronic device (102);
generating (209) a list (114) of said available software by retrieving at least a first portion (114a) of said list (114) from a public server (106) that is publicly accessible and enabled as a gateway for software downloads, and determining at least a second portion (114b) of said list (114) based on software available from resources associated with said proxy server (105);
modifying (211) said list (114) to produce a modified list (115) of approved software by way of rules (116) available to said proxy server (105), said rules (116) comprising identifiers of approved and/or disallowed software; and
transmitting (213) said modified list (115) to said computing device (103) such that said approved software can be selected for installation on said mobile electronic device (102).

2. The method of claim 1, further comprising:
receiving (217) from said computing device (103) a selection from said modified list (115);
retrieving (219) data files (170, 180) associated with said selection; and
transmitting said data files (170, 180) to said computing device (103) for installation (221) on said mobile electronic device (102).

3. The method of claim 2, wherein said retrieving (219) said data files (170, 180) comprises at least one of retrieving data files (180) from said public server (106) and retrieving data files (170) from resources associated with said proxy server (105).

4. The method of claim 3, further comprising storing a subset of said data files (170, 180) at said resources associated with said proxy server (105), said subset comprising data files (180) retrieved from said public server (106) such that said subset (180) need not be retrieved a second time from said public server (106).

5. The method of any of the previous claims, wherein said modifying (211) said list (114) to produce a modified list (115) of approved software further comprises at least one of:
modifying said list based on said rules (116) available to said proxy server (105);
removing software that is not approved and/or disallowed from said list (114); and,
adding approved software available from resources associated with said proxy server (105), but not available from said public server (106), to said list (114).

6. The method of any of the previous claims, wherein said modified list (115) comprises at least one of:
at least one identifier of said approved software; and
at least one network address of a resource from where data files associated with said approved software can be retrieved.

7. The method of claim 1, further comprising:
authenticating said query; and
when said authentication fails, at least one of transmitting an error message to said computing device (103) and redirecting said query to said proxy server (105), rather than performing said generating step (209), said modifying step (211) and said transmitting said modified list (115) to said computing device (103) step (213).

8. A method for installing software at a mobile electronic device (102), said mobile electronic device (102) enabled for communication with a computing device (103), said method implementable in said computing device (103), said method comprising:
retrieving (111) a network address (109) of a proxy server (105) from said mobile electronic device (102), said network address (109) being pre-stored in the mobile electronic device (102);
querying (113) said proxy server (105), using said network address (109), for available software for installation on said mobile electronic device (102), , said proxy server (105) configured to generate a list (114) of available software by retrieving (118) at least a first portion (114a) of said list (114) from a public server (106) that is publicly accessible and enabled as a gateway for software downloads and determining at least a second portion (114b) of said list (114) based on software available from resources associated with said proxy server (105);
receiving (117) a modified list (115) of approved software, from said proxy server (105), said modified list (115) generated at said proxy server (105) based on rules (116), available to said proxy server (105), said rules (116) comprising identifiers of approved and/or disallowed software;
receiving input data (701, 801) associated with a selection of said approved software from said modified list (115), for installation on said mobile electronic device (102); and
retrieving data files (170, 180) associated with said selection for installation at said mobile electronic device (102).

9. The method of claim 8, further comprising causing said data files to be installed (221) at said mobile electronic device (102).

10. A proxy server (105) for installing software at a mobile electronic device (102), said mobile electronic device (102) enabled for communication with a computing device (103), wherein a network address (109) of the proxy server (105) for querying the proxy server (105) is pre-stored in the mobile electronic device (102), said proxy server (105) comprising:
a processing unit (162) interconnected with a communication interface (164), said processing unit (162) enabled to implement the steps of the method of any one of claims 1 to 7.

11. A computing device (103) for installing software at a mobile electronic device (102), comprising:
a processing unit (122) interconnected with a communication interface (124) and an input device (126), said communication interface (124) enabled to communicate with said mobile electronic device (102), said processing unit (122) enabled to implement the steps of the method of any one of claims 8 or 9 .

12. A system for installing software at a mobile electronic device (102), comprising:
a proxy server (105) enabled to:
receive (113) an identifier (112) of said mobile electronic device (102);
generate (209) a list (114) of available software available for installation on said mobile electronic device (102) by retrieving at least a first portion (114a) of said list (114) from a public server (106) that is publicly accessible and enabled as a gateway for software downloads and determining at least a second portion (114b) of said list (114) based on software available from resources associated with said proxy server (105);
modify (211) said list (114) based on rules (116) available to said proxy server (105), said rules (116) comprising identifiers of approved and/or disallowed software; and
transmit (213) said modified list (115) such that said approved software on said modified list (115) can be selected for installation on said mobile electronic device (102); and
a computing device (103) enabled to:
retrieve (111) a network address (109) of said proxy server (105) from said mobile electronic device (102), said network address (109) being pre-stored in the mobile electronic device (102);
query (113) said proxy server (105) for said available software, using said network address (109);
receive (117) said modified list (115);
receive input data (701, 801) associated with a selection of said approved software from said modified list (115), for installation on said mobile electronic device (102); and
retrieve data files (108b) associated with said selection for installation at said mobile electronic device (102).

13. A computer program product, comprising a computer usable medium having a computer readable program code adapted to be executed to implement the steps of the method of any one of claims 1 to 7.

14. A computer program product, comprising a computer usable medium having a computer readable program code adapted to be executed to implement the steps of the method of any one of claims 8 or 9.

## Patentansprüche

1. Verfahren, um Software bei einer mobilen elektronischen Einrichtung (102) zu installieren, wobei die mobile elektronische Einrichtung (102) zur Kommunikation mit einer Rechenvorrichtung (103) aktiviert ist und das Verfahren in einem Proxy-Server (105) implementierbar ist, der zur Kommunikation mit der Rechenvorrichtung (103) aktiviert ist, wobei das Verfahren Folgendes umfasst:
Empfangen (207) von der Rechenvorrichtung (103) einer Abfrage (113) zur Installation auf der mobilen elektronischen Einrichtung (102) verfügbarer Software, wobei die Anfrage zum Proxy-Server (105) gerichtet ist und eine Netzadresse (109) des Proxy-Servers (105), um den Proxy-Server (105) abzufragen, in der mobilen elektronischen Einrichtung (102) vorgespeichert ist;
Erzeugen (209) einer Liste (114) der verfügbaren Software durch Abrufen mindestens eines ersten Abschnitts (114a) der Liste (114) von einem öffentlichen Server (106), der öffentlich zugänglich und als ein Gateway für Software-Downloads aktiviert ist, und Bestimmen mindestens eines zweiten Abschnitts (114b) der Liste (114) auf der Grundlage von Software, die von Betriebsmitteln, die dem Proxy-Server (105) zugeordnet sind, verfügbar ist;
Modifizieren (211) der Liste (114), um eine modifizierte Liste (115) von genehmigter Software in Form von Regeln (116), die für den Proxy-Server (105) verfügbar sind, herzustellen, wobei die Regeln (116) Kennungen von genehmigter und/oder nicht erlaubter Software enthalten; und
Senden (213) der modifizierten Liste (115) zur Rechenvorrichtung (103) derart, dass die genehmigte Software zur Installation auf der mobilen elektronischen Einrichtung (102) gewählt werden kann.

2. Verfahren nach Anspruch 1, das ferner Folgendes umfasst:
Empfangen (217) einer Auswahl aus der modifizierten Liste (115) von der Rechenvorrichtung (103);
Abrufen (219) von Datendateien (170, 180), die der Auswahl zugeordnet sind; und
Senden der Datendateien (170, 180) zur Installation (221) auf der mobilen elektronischen Einrichtung (102) zur Rechenvorrichtung (103).

3. Verfahren nach Anspruch 2, wobei das Abrufen (219) der Datendateien (170, 180) das Abrufen von Datendateien (180) vom öffentlichen Server (106) und/oder das Abrufen von Datendateien (170) von Betriebsmitteln, die dem Proxy-Server (105) zugeordnet sind, umfasst.

4. Verfahren nach Anspruch 3, das ferner das Speichern einer Untermenge der Datendateien (170, 180) bei den Betriebsmitteln, die dem Proxy-Server (105) zugeordnet sind, umfasst, wobei die Untermenge Datendateien (180), die vom öffentlichen Server (106) derart abgerufen wurden, dass die Untermenge (180) ein zweites Mal vom öffentlichen Server (106) abgerufen werden muss, umfasst.

5. Verfahren nach einem der vorhergehenden Ansprüche, wobei das Modifizieren (211) der Liste (114), um eine modifizierte Liste (115) von genehmigter Software herzustellen, die ferner Folgendes umfasst:
Modifizieren der Liste auf der Grundlage der Regeln (116), die für den Proxy-Server (105) verfügbar sind; und/oder .
Entfernen von Software, die nicht genehmigt und/oder nicht erlaubt ist, von der Liste (114) und/oder
Hinzufügen genehmigter Software, die von Betriebsmitteln verfügbar ist, die dem Proxy-Server (105) zugeordnet sind, aber nicht vom öffentlichen Server (106) verfügbar sind, zur Liste (114).

6. Verfahren nach einem der vorhergehenden Ansprüche, wobei die modifizierte Liste (115) Folgendes umfasst:
mindestens eine Kennung der genehmigten Software und/oder
mindestens eine Netzadresse eines Betriebsmittels, von der Datendateien, die der genehmigten Software zugeordnet sind, abgerufen werden können.

7. Verfahren nach Anspruch 1, das ferner Folgendes umfasst:
Authentifizieren der Abfrage und
dann, wenn die Authentifizierung fehlschlägt, Senden einer Fehlernachricht zur Rechenvorrichtung (103) und/oder Umleiten der Abfrage zu dem Proxy-Server (105) statt Durchführen des Erzeugungsschrittes (209), des Modifizierschrittes (211) und des Schrittes (213) des Sendens der modifizierten Liste (115) zur Rechenvorrichtung (103).

8. Verfahren, um eine Software bei einer mobilen elektronischen Einrichtung (102) zu installieren, wobei die mobile elektronische Einrichtung (102) zur Kommunikation mit einer Rechenvorrichtung (103) aktiviert ist und das Verfahren in der Rechenvorrichtung (103) implementiert werden kann, wobei das Verfahren Folgendes umfasst:
Abrufen (111) einer Netzadresse (109) eines Proxy-Servers (105) von der mobilen elektronischen Einrichtung (102), wobei die Netzadresse (109) in der mobilen elektronischen Einrichtung (102) vorgespeichert ist;
Abfragen (113) des Proxy-Servers (105) unter Verwendung der Netzadresse (109) hinsichtlich zur Installation auf der mobilen elektronischen Einrichtung (102) verfügbarer Software, wobei der Proxy-Server (105) konfiguriert ist, eine Liste (114) verfügbarer Software durch Abrufen (118) mindestens eines ersten Abschnitts (114a) der Liste (114) von einem öffentlichen Server (106), der öffentlich zugänglich und als ein Gateway für Software-Downloads aktiviert ist, zu erzeugen und mindestens einen zweiten Abschnitt (114b) der Liste (114) auf der Grundlage von Software, die von Betriebsmitteln, die dem Proxy-Server (105) zugeordnet sind, verfügbar ist;
Empfangen (117) einer modifizierten Liste (115) von genehmigter Software vom Proxy-Server (105), wobei die modifizierte Liste (115) beim Proxy-Server (105) auf der Grundlage von Regeln (116), die für den Proxy-Server (105) verfügbar sind, erzeugt wird und die Regeln (116) Kennungen von genehmigter und/oder nicht erlaubter Software enthalten;
Empfangen von Eingangsdaten (701, 801), die einer Auswahl der genehmigten Software von der modifizierten Liste (115) zugeordnet sind, zur Installation auf der mobilen elektronischen Einrichtung (102) und
Abrufen von Datendateien (170, 180), die der Auswahl zur Installation bei der mobilen elektronischen Einrichtung (102) zugeordnet sind.

9. Verfahren nach Anspruch 8, das ferner das Bewirken, dass die Datendateien bei der mobilen elektronischen Einrichtung (102) installiert (221) werden, umfasst.

10. Proxy-Server (105), um Software bei einer mobilen elektronischen Einrichtung (102) zu installieren, wobei die mobile elektronische Einrichtung (102) zur Kommunikation mit einer Rechenvorrichtung (103) aktiviert ist, eine Netzadresse (109) des Proxy-Servers (105) zum Abfragen des Proxy-Servers (105) in der mobilen elektronischen Einrichtung (102) vorgespeichert ist und der Proxy-Server (105) Folgendes umfasst:
eine Verarbeitungseinheit (162), die mit einer Kommunikationsschnittstelle (164) verbunden ist, wobei die Verarbeitungseinheit (162) aktiviert ist, die Schritte des Verfahrens nach einem der Ansprüche 1 bis 7 zu implementieren.

11. Rechenvorrichtung (103), um Software bei einer mobilen elektronischen Einrichtung (102) zu installieren, die Folgendes umfasst:
eine Verarbeitungseinheit (122), die mit einer Kommunikationsschnittstelle (124) und einer Eingangseinrichtung (126) verbunden ist, wobei die Kommunikationsschnittstelle (124) aktiviert ist, mit der mobilen elektronischen Einrichtung (102) zu kommunizieren, und die Verarbeitungseinheit (122) aktiviert ist, die Schritte des Verfahrens nach einem der Ansprüche 8 oder 9 zu implementieren.

12. System, um Software bei einer mobilen elektronischen Einrichtung (102) zu installieren, das Folgendes umfasst:
einen Proxy-Server (105), der aktiviert ist zum
Empfangen (113) einer Kennung (112) der mobilen elektronischen Einrichtung (102);
Erzeugen (209) einer Liste (114) verfügbarerer Software, die zur Installation auf der mobilen elektronischen Einrichtung (102) verfügbar ist, durch Abrufen mindestens eines ersten Abschnitts (114a) der Liste (114) von einem öffentlichen Server (106), der öffentlich zugänglich und als ein Gateway für Software-Downloads aktiviert ist, und Bestimmen mindestens eines zweiten Abschnitts (114b) der Liste (114) auf der Grundlage von Software, die von Betriebsmitteln, die dem Proxy-Server (105) zugeordnet sind, verfügbar sind;
Modifizieren (211) der Liste (114) auf der Grundlage von Regeln (116), die für den Proxy-Server (105) verfügbar sind, wobei die Regeln (116) Kennungen von genehmigter und/oder nicht erlaubter Software enthalten; und
Senden (213) der modifizierten Liste (115) derart, dass die genehmigte Software auf der modifizierten Liste (115) zur Installation auf der mobilen elektronischen Einrichtung (102) gewählt werden kann; und
eine Rechenvorrichtung (103), die aktiviert ist zum
Abrufen (111) einer Netzadresse (109) des Proxy-Servers (105) von der mobilen elektronischen Einrichtung (102), wobei die Netzadresse (109) in der mobilen elektronischen Einrichtung (102) vorgespeichert ist;
Abfragen (113) des Proxy-Servers (105) hinsichtlich der verfügbaren Software unter Verwendung der Netzadresse (109);
Empfangen (117) der modifizierten Liste (115);
Empfangen von Eingangsdaten (701, 801), die einer Auswahl der genehmigten Software von der modifizierten Liste (115) zugeordnet sind, zur Installation auf der mobilen elektronischen Einrichtung (102); und
Abrufen von Datendateien (108b), die der Auswahl zur Installation bei der mobilen elektronischen Einrichtung (102) zugeordnet sind.

13. Computerprogrammprodukt, das ein computerverwendbares Medium enthält, das einen computerlesbaren Programmcode besitzt, der ausgelegt ist, ausgeführt zu werden, um die Schritte des Verfahrens nach einem der Ansprüche 1 bis 7 zu implementieren.

14. Computerprogrammprodukt, das ein computerverwendbares Medium enthält, das einen computerlesbaren Programmcode besitzt, der ausgelegt ist, ausgeführt zu werden, um die Schritte des Verfahrens nach einem der Ansprüche 8 oder 9 zu implementieren.

## Revendications

1. Procédé d'installation d'un logiciel sur un dispositif électronique mobile (102), ledit dispositif électronique mobile (102) étant activé pour la communication avec un dispositif informatique (103), ledit procédé pouvant être mis en oeuvre dans un serveur proxy (105) activé pour la communication avec ledit dispositif informatique (103), ledit procédé comprenant les étapes consistant à :
recevoir (207), dudit dispositif informatique (103), une requête (113) pour obtenir des logiciels disponibles pour installation sur ledit dispositif électronique mobile (102), ladite requête étant dirigée vers ledit serveur proxy (105), une adresse réseau (109) du serveur proxy (105) pour interroger le serveur proxy (105) étant préenregistrée dans le dispositif électronique mobile (102) ;
générer (209) une liste (114) desdits logiciels disponibles en récupérant au moins une première partie (114a) de ladite liste (114) à partir d'un serveur public (106) qui est accessible au public et activé comme passerelle pour le téléchargement de logiciels, et déterminer au moins une deuxième partie (114b) de ladite liste (114) sur la base de logiciels disponibles à partir de ressources associées audit serveur proxy (105) ;
modifier (211) ladite liste (114) pour produire une liste modifiée (115) de logiciels approuvés au moyen de règles (116) disponibles audit serveur proxy (105), lesdites règles (116) comprenant des identifiants de logiciels approuvés et/ou interdits ; et
transmettre (213) ladite liste modifiée (115) audit dispositif informatique (103) de telle sorte que lesdits logiciels approuvés puissent être sélectionnés pour installation sur ledit dispositif électronique mobile (102).

2. Procédé selon la revendication 1, comprenant en outre les étapes consistant à :
recevoir (217) dudit dispositif informatique (103) une sélection à partir de ladite liste modifiée (115) ;
récupérer (219) des fichiers de données (170, 180) associés à ladite sélection ; et
transmettre lesdits fichiers de données (170, 180) audit dispositif informatique (103) pour installation (221) sur ledit dispositif électronique mobile (102).

3. Procédé selon la revendication 2, dans lequel l'étape consistant à récupérer (219) lesdits fichiers de données (170, 180) comprend au moins l'une des étapes consistant à récupérer des fichiers de données (180) à partir dudit serveur public (106) et à récupérer des fichiers de données (170) à partir de ressources associées audit serveur proxy (105).

4. Procédé selon la revendication 3, comprenant en outre l'étape consistant à stocker un sous-ensemble desdits fichiers de données (170, 180) au niveau desdites ressources associées audit serveur proxy (105), ledit sous-ensemble comprenant des fichiers de données (180) récupérés à partir dudit serveur public (106) de telle sorte que ledit sous-ensemble (180) n'a pas besoin d'être récupéré une seconde fois à partir dudit serveur public (106).

5. Procédé selon l'une quelconque des revendications précédentes, dans lequel l'étape consistant à modifier (211) ladite liste (114) pour produire une liste modifiée (115) de logiciels approuvés comprend en outre au moins l'une des étapes consistant à :
modifier ladite liste sur la base desdites règles (116) disponibles audit serveur proxy (105) ;
retirer de ladite liste (114) les logiciels qui ne sont pas approuvés et/ou sont interdits ;
ajouter à ladite liste (114) des logiciels approuvés disponibles à partir de ressources associées audit serveur proxy (105), mais non disponibles à partir dudit serveur public (106).

6. Procédé selon l'une quelconque des revendications précédentes, dans lequel ladite liste modifiée (115) comprend :
au moins un identifiant desdits logiciels approuvés ; et/ou
au moins une adresse réseau d'une ressource à partir de laquelle les fichiers de données associés auxdits logiciels approuvés peuvent être récupérés.

7. Procédé selon la revendication 1, comprenant en outre les étapes consistant à :
authentifier ladite requête ; et
lorsque ladite authentification échoue, exécuter au moins l'une des étapes consistant à transmettre un message d'erreur audit dispositif informatique (103) et à rediriger ladite requête vers ledit serveur proxy (105), plutôt que d'exécuter ladite étape de génération (209), ladite étape de modification (211) et ladite étape de transmission (213) de ladite liste modifiée (115) audit dispositif informatique (103).

8. Procédé d'installation d'un logiciel sur un dispositif électronique mobile (102), ledit dispositif électronique mobile (102) étant activé pour la communication avec un dispositif informatique (103), ledit procédé pouvant être mis en oeuvre dans ledit dispositif informatique (103), ledit procédé comprenant les étapes consistant à :
récupérer (111) une adresse réseau (109) d'un serveur proxy (105) à partir dudit dispositif électronique mobile (102), ladite adresse réseau (109) étant préenregistrée dans le dispositif électronique mobile (102) ;
interroger (113) ledit serveur proxy (105), en utilisant ladite adresse réseau (109), pour obtenir des logiciels disponibles pour installation sur ledit dispositif électronique mobile (102), ledit serveur proxy (105) étant configuré pour générer une liste (114) de logiciels disponibles en récupérant (118) au moins une première partie (114a) de ladite liste (114) à partir d'un serveur public (106) qui est accessible au public et activé en tant que passerelle pour le téléchargement de logiciels et en déterminant au moins une deuxième partie (114b) de ladite liste (114) sur la base de logiciels disponibles à partir de ressources associées audit serveur proxy (105) ;
recevoir (117) une liste modifiée (115) de logiciels approuvés dudit serveur proxy (105), ladite liste modifiée (115) étant générée au niveau dudit serveur proxy (105) sur la base de règles (116), disponibles audit serveur proxy (105), lesdites règles (116) comprenant des identifiants de logiciels approuvés et/ou interdits ;
recevoir des données d'entrée (701, 801) associées à une sélection desdits logiciels approuvés à partir de ladite liste modifiée (115), pour installation sur ledit dispositif électronique mobile (102) ; et
récupérer des fichiers de données (170, 180) associés à ladite sélection pour installation sur ledit dispositif électronique mobile (102).

9. Procédé selon la revendication 8, comprenant en outre l'étape consistant à faire installer (221) lesdits fichiers de données sur ledit dispositif électronique mobile (102).

10. Serveur proxy (105) pour installer des logiciels sur un dispositif électronique mobile (102), ledit dispositif électronique mobile (102) étant activé pour la communication avec un dispositif informatique (103), une adresse réseau (109) du serveur proxy (105) pour interroger le serveur proxy (105) étant préenregistrée dans le dispositif électronique mobile (102), ledit serveur proxy (105) comprenant :
une unité de traitement (162) interconnectée avec une interface de communication (164), ladite unité de traitement (162) étant activée pour mettre en oeuvre les étapes du procédé selon l'une quelconque des revendications 1 à 7.

11. Dispositif informatique (103) pour installer des logiciels sur un dispositif électronique mobile (102), comprenant :
une unité de traitement (122) interconnectée avec une interface de communication (124) et un dispositif d'entrée (126), ladite interface de communication (124) étant activée pour communiquer avec ledit dispositif électronique mobile (102), ladite unité de traitement (122) étant activée pour mettre en oeuvre les étapes du procédé selon l'une quelconque des revendications 8 ou 9.

12. Système pour installer des logiciels sur un dispositif électronique mobile (102), comprenant :
un serveur proxy (105) activé pour :
recevoir (113) un identifiant (112) dudit dispositif électronique mobile (102) ;
générer (209) une liste (114) de logiciels disponibles pour installation sur ledit dispositif électronique mobile (102) en récupérant au moins une première partie (114a) de ladite liste (114) à partir d'un serveur public (106) qui est accessible au public et activé comme passerelle pour le téléchargement de logiciels et en déterminant au moins une deuxième partie (114b) de ladite liste (114) sur la base de logiciels disponibles à partir de ressources associées audit serveur proxy (105) ;
modifier (211) ladite liste (114) sur la base de règles (116) disponibles audit serveur proxy (105), lesdites (116) règles comprenant des identifiants de logiciels approuvés et/ou interdits ; et
transmettre (213) ladite liste modifiée (115) de telle sorte que lesdits logiciels approuvés de ladite liste modifiée (115) puissent être sélectionnés pour installation sur ledit dispositif électronique mobile (102) ; et
un dispositif informatique (103) activé pour :
récupérer (111) une adresse réseau (109) dudit serveur proxy (105) à partir dudit dispositif électronique mobile (102), ladite adresse réseau (109) étant préenregistrée dans le dispositif électronique mobile (102) ;
interroger (113) ledit serveur proxy (105) pour obtenir lesdits logiciels disponibles, en utilisant ladite adresse réseau (109) ;
recevoir (117) ladite liste modifiée (115) ;
recevoir des données d'entrée (701, 801) associées à une sélection desdits logiciels approuvés à partir de ladite liste modifiée (115), pour installation sur ledit dispositif électronique mobile (102) ; et
récupérer des fichiers de données (108b) associés à ladite sélection pour installation sur ledit dispositif électronique mobile (102).

13. Produit de programme d'ordinateur, comprenant un support utilisable par ordinateur comportant un code de programme lisible par ordinateur adapté à être exécuté pour mettre en oeuvre les étapes du procédé selon l'une quelconque des revendications 1 à 7.

14. Produit de programme d'ordinateur, comprenant un support utilisable par ordinateur comportant un code de programme lisible par ordinateur adapté à être exécuté pour mettre en oeuvre les étapes du procédé selon l'une quelconque des revendications 8 ou 9.
